(19)

Europäisches
Patentamt
European
Patent Office
Office européen
des brevets

(11) **EP 1 760 861 B1**

(12) **EUROPEAN PATENT SPECIFICATION**

(45) Date of publication and mention
of the grant of the patent:
**13.10.2010 Bulletin 2010/41**

(51) Int Cl.:
*H02K 7/118* (2006.01)          *H02K 1/14* (2006.01)
*F04D 13/02* (2006.01)          *H02K 29/03* (2006.01)

(21) Application number: **06016772.3**

(22) Date of filing: **11.08.2006**

(54) **Permanent-magnet two-phase synchronous electric motor with mechanical start-up for washing machines and similar household appliances, in particular for washing pumps**

Zweiphasiger permanentmagnetischer Synchronmotor mit mechanischer Starthilfe für Waschmaschinen und ähnliche Hausgeräte, insbesondere für Waschpumpen

Moteur synchrone biphasé avec rotor aux aimants permanents et démarrage mécanique pour machines à laver ou machines domestiques pareils, en particulier pour pompe de lavage

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.08.2005 EP 05425607**

(43) Date of publication of application:
**07.03.2007 Bulletin 2007/10**

(73) Proprietor: **Askoll Holding S.r.l.**
**36031 Povolaro di Dueville (Vicenza) (IT)**

(72) Inventor: **Marioni, Elio**
**36031 Dueville (Vicenza) (IT)**

(74) Representative: **Botti, Mario et al**
**Botti & Ferrari S.r.l.**
**Via Cappellini, 11**
**20124 Milano (IT)**

(56) References cited:
**EP-B- 0 983 630          DE-A1- 2 337 905**
**GB-A- 621 005          US-A- 5 708 406**
**US-A1- 2002 149 282          US-A1- 2005 162 034**
**US-B1- 6 452 303**

**Description**

Field of application

The present invention relates to a permanent-magnet two-phase synchronous electric motor with mechanical start-up, particularly but not exclusively indicated for dishwashing machines and similar household appliances, in particular for washing pumps of said machines.

More in particular, the invention relates to a motor of the above type and centrally comprising an axial rotor with permanent magnets, a stator with a lamination pack core and with a double pair of pole pieces, main and secondary, enveloping said rotor.

Prior art

The need is known for producing washing pumps for household appliances such as washing machines, dishwashers, and similar appliances, which have the best hydraulic efficiency possible, meant as the best ratio between the hydraulics rate available at the pump, such as fluid pressure or power, and the electric power absorbed by the motor to which each pump is associated.

A further requirement for dishwashers is to lower the hydraulic power of the pump as much as possible and, consequently, the power supplied to the motor, so as to reduce both the quantity of fluid to be circulated and the power necessary to heat the water during the washing cycles.

In order to satisfy both these requirements, the prior art offers centrifugal or rotating pumps with high hydraulic efficiency for fluid circulation, for example as described in European patent no. EP 0983630B1 by the same Applicant.

Said pumps are set in rotation by a synchronous motor. However, as is known, there is an intrinsic problem with small synchronous motors due to the fact that, to set said pumps in rotation, bidirectional type motors are used where, during start up, the rotor can be rotated either clockwise or anticlockwise. Said bidirectional motors are advantageous since they are highly efficient and have a relatively low power absorption rate. This high hydraulic efficiency of the centrifugal pumps is obtained with flexible blade impellers which are pre-orientated and which allow to obtain unidirectional washing pumps characterized by a well-defined rotation direction.

Consequently, in order to produce rotating pumps with high hydraulic efficiency, driven by a synchronous motor, it is necessary to provide the motor with electronic starting devices (as described for example in patent EP1351375B1) or with mechanical starting devices (as described for example in the above-mentioned patent EP 0 983 630B1) which make it possible to establish the rotation direction of the synchronous motor in order to obtain the best possible hydraulic efficiency of the pump.

The electronic starting devices previously described are applied to single phase motors and have high costs regarding both production and application to the motor, said costs still representing an insuperable obstacle which prevails over the need to optimize power efficiency, so much so that the use of unidirectional motors with mechanical type devices are preferred even though they have lower efficiency and higher operational noise.

The high cost of said devices fundamentally prevents the use of centrifugal pumps on the above type on dishwashing machines for household use and belonging to the category of inexpensive machines.

As is well known to the skilled in the art, the washing pumps used in dishwashers today are driven by a single phase synchronous electric motor where the rotor is advantageously produced with permanent magnets and the stator comprises a lamination pack core with at least two pole pieces and consequent stator winding, provided with a mechanical type starting device.

The latter, which are the most common and economical synchronous motors, comprise only two stator pole pieces and make it possible to produce the so-called single phase synchronous pumps which, however, are penalized by the relatively high noise level due to vibrations.

Moreover, in an attempt to radically eliminate vibration problems due to the existing design of the single phase synchronous motor, the prior art proposes the use of a two-phase synchronous motor provided with four pole pieces for the washing pumps used in more expensive dishwashers. For example, a stator with four pole pieces for a synchronous motor is described in the US patent No. 6,452,303 by the same Applicant.

Normally the four pole pieces are made with E-shaped sheared lamination packs. Said laminated sheets are obtained from the same sheet steel so as to reduce production waste and are overlapped in packs so forming stator group portions which are also E-shaped. Each stator pole piece is obtained by coupling a stator winding with a corresponding lamination pack.

This stator structure has the advantage that it is easy to make and at a relatively limited cost. However, the two-phase synchronous pumps produced until now with this stator structure also require an electronic driving device to make it possible, during the start transient phase, to start up the rotor of the synchronous motor gradually until operational synchronism is obtained.

However, the cost of the electronic driving device is comparable to the cost of the mechanical structure of the motor and, therefore, the use of two-phase synchronous motors becomes inconceivable for dishwashers in the inexpensive range but which, however, are those with the greatest sales volume.

Examples of known electric motors are shown in the prior art, wherein documents GB621005 and EP0983630 disclose electric motors, documents US2002/149282 and US6452303 disclose stators for electric motors and document US5708406 discloses an actuator.

The technical problem at the basis of the present invention is to provide a permanent-magnet two-phase synchronous electric motor, in particular for washing pumps for washing machines, which has structural and functional characteristics such as to allow an easy start-up of a completely mechanical type, further guaranteeing a simple structure and a limited number of components which make production possible at a considerably lower cost than the solutions offered today by the prior art.

Summary of the invention

The solution at the basis of the present invention is to provide, for the two-phase motor, a phase shift in the power supply at the stator windings and a stator structure such as to reduce the torque in the starting phase, so enabling better and more regular kinematic coupling between the rotor and the load.

The technical problem of the present invention is solved by a motor of the type previously indicated and defined in claim 1.

Moreover, in order to further reduce production costs, assembly of the stator group core is provided by means of a lamination pack with an axial length smaller than the axial length of the corresponding pole piece ends.

Advantageously, said pole piece ends are removably associated to the lamination pack and, in any case, are structurally independent.

It should also be noted that afore mentioned pole piece ends are produced by pressing and successive sintering starting from microencapsulated magnetic powders and insulated by electrically insulating materials.

The features and advantages of the motor according to the invention will become more apparent from the following description of an embodiment given by way of indicative and non-limiting example with reference to the attached drawings.

Brief description of the drawings

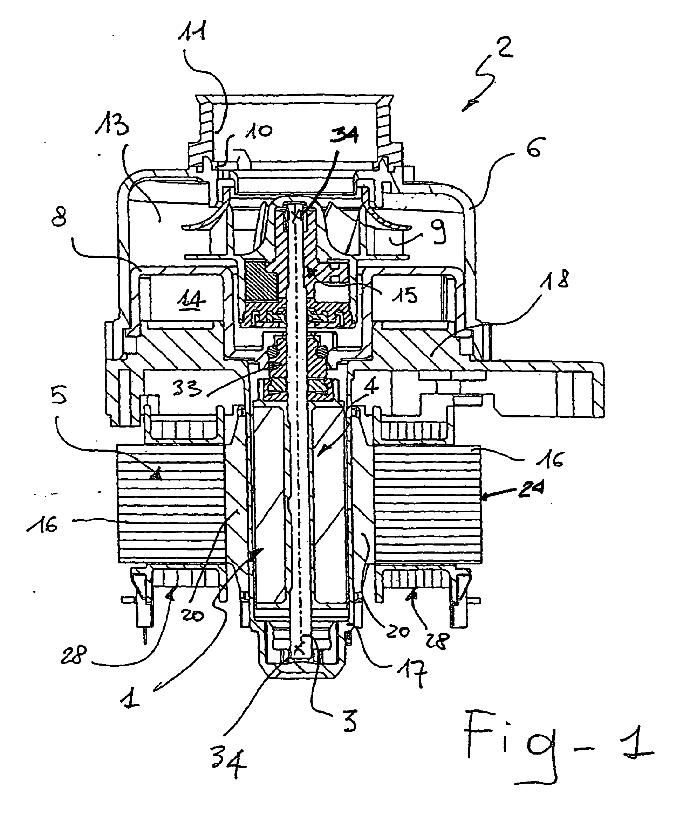

- figure 1 schematically shows, in a longitudinal section, a washing pump incorporating a synchronous electric motor according to the present invention;

- figure 2 shows schematically and in perspective, with detached parts, of the pump in figure 1 with all its components illustrated;

- figures 3 and 3A show top schematic views from above of a stator of the electric motor produced according to the invention and a detail of such stator respectively;

- figure 4 shows schematically and in perspective, with detached parts, of the stator in figure 3;

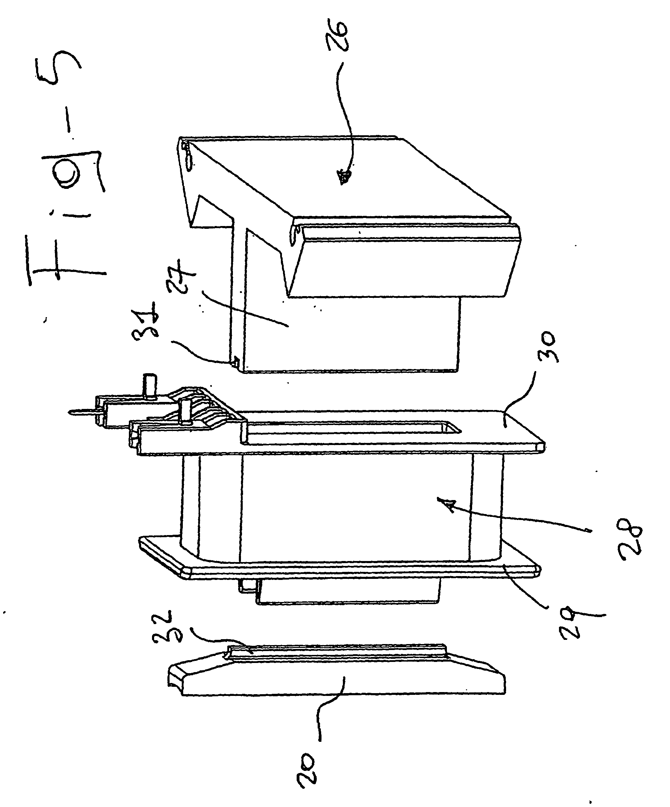

- figure 5 shows a further schematic view in perspective of a detail of the stator in figure 3;

- figure 6 schematically shows the power supply of the electric motor stator windings according to the invention;

- figures 7 and 8 show a part of a diagram representing a variation in the cogging torque in a two-phase motor with stator with symmetrical and asymmetrical pieces respectively;

- figures 8A and 8B show, in respective diagrams, the values of unitary resistance and permeance of the motor windings in relation to the number of turns varies;

- figure 9 shows a schematic view in perspective, with detached parts, of a portion of a pump with a stator variation;

- figure 10 shows a schematic view in perspective of a detail of the stator variation shown in figure 9;

- figure 11 shows a schematic view in perspective of a detail of a second stator variation;

- figures 12 and 13 respectively show a view in perspective and a lateral view of a variation according to an embodiment of stator pole piece end.

Detailed description

With reference to said drawings, 1 generally and schematically indicates a two-phase synchronous electric motor with mechanical starting made according to the present invention for driving a synchronous washing pump 2 to be mounted preferably on machines for washing such as washing machines and dishwashers, not shown in the drawings since they are conventional appliances.

The motor 1 has a permanent-magnet central rotor 4 and a stator 5 comprising a lamination pack core 16 with a double pair of pole pieces 20, main and secondary, enveloping the rotor 4 and from which they are distanced by respective air-gaps 22.

The rotor 4 has a longitudinal axis x-x which coincides with a rotation shaft 3, supported by opposing bearings 33, 34.

The rotor 4 is sealed from the stator 5 by a shell 17, essentially tube-shaped and forming integral part with a portion 181 of a flange intended to be coupled with a shell 6 of the pump 2. The slenderness ratio of the rotor, i.e. the length of the rotor compared to its diameter, is preferably greater than 2. The rotor 4 is a so-called low moment of inertia rotor, which makes it possible to obtain a shorter start transient, so that it rapidly reaches the synchronous speed.

As is known to the skilled in the art, the motor 1 is intended to drive the operational gear, i.e. an impeller 9, of the pump 2.

The protection shell 6 of the pump 2 is formed by a cup-shaped casing with a hole 10 defining an opening for an induction pipe 11. A delivery pipe 12 is radially connected to the cup-shaped casing.

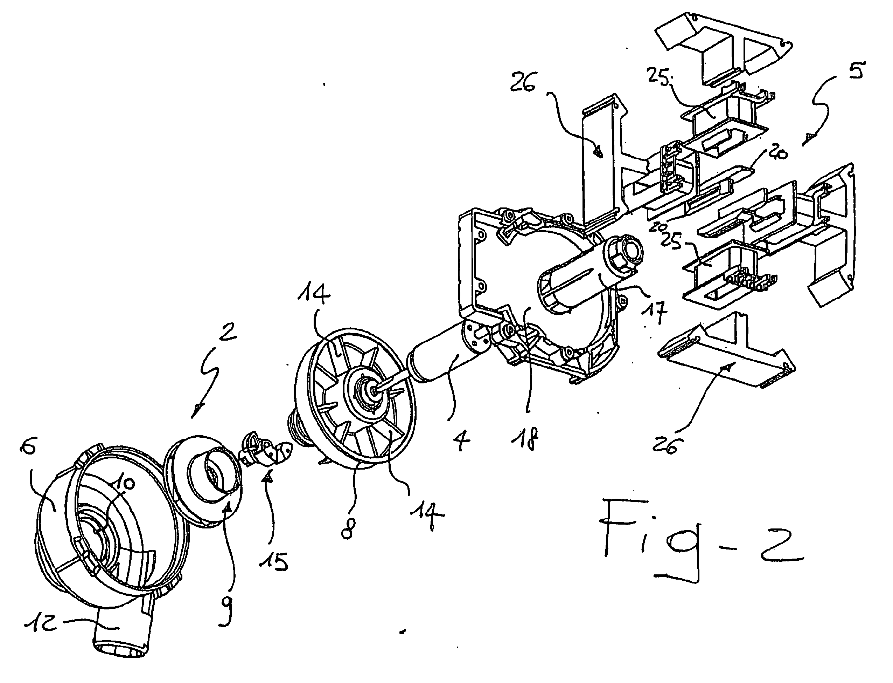

A chamber 13 is defined in the shell 6 for the impeller 9; said chamber 13 is sealed by a cover 8 visible in figure 2 and fitted on the mouth of the cup-shaped shell 6. The cover 8 is reinforced by ribbing 14.

The cover 8 is provided centrally with a hole for the passage of the end of the driving shaft 3 which is kinematically coupled to the impeller 9 preferably by means of a double coupling 15 described for example in European patent no. 0983630 by the same Applicant.

More in detail, the coupling between the driving shaft 3 and the impeller 9 is obtained by interposing two motion transmission couplings associated in kinematic series.

A first coupling comprises a driving tooth forming integral part with the end of the shaft 3 facing the impeller 9 and a second driven element, eccentric respect to the axis x-x and which revolves around the rotor inside a chamber lying under the impeller.

Said second driven element of the first motion transmission couplings represents the first driving element of the second motion transmission coupling which also comprises a second driven element integral with the impeller.

The angle covered by each motion transmission coupling is less than 360° but the overall angle covered by the pair of motion transmission couplings associated in kinematic series is greater than 360°.

In this way, the freedom of the rotor to rotate is greatly increased during start-up of the motor before effective load dragging takes place, in this case represented by the impeller 9 of the pump 2.

This characteristic makes it possible to gradually start up the two-phase motor according to the invention so as to reach synchronous operation in the best way possible.

Advantageously, the particularly slender rotor 4 of the present invention has no intrinsic difficulties during motor start-up. The double coupling 15 during start-up makes it possible to uncouple the load, i.e. the impeller 9 of the pump 2, allowing the rotor 4 to start in the right direction.

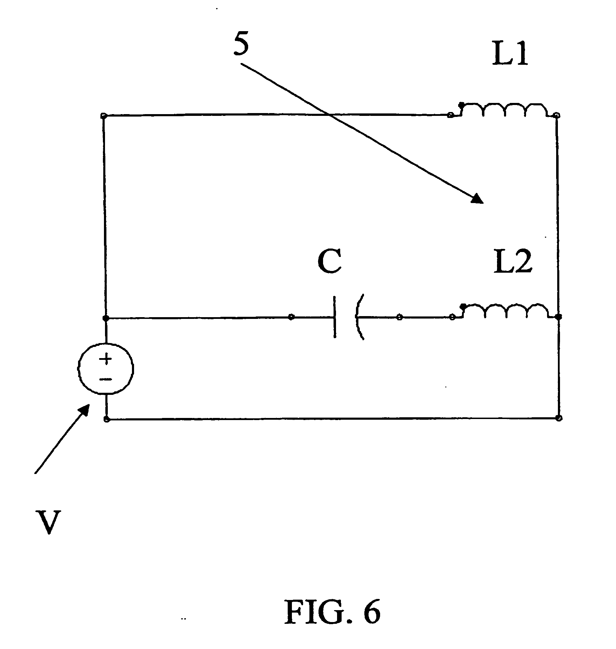

According to the present invention, the device for coupling between the rotor and the load described above cooperates with the power supply of the motor which, as well illustrated in figure 6, make it possible to obtain a phase shift in the supply of the windings L1, L2 of the stator 5 by means of the use of a simple condenser C.

L1 and L2 are meant to represent the windings placed in the two-phase motor quadrature, each comprising two opposing coils connected in series and which are therefore considered as a single induction element called L1 or L2.

Therefore, while the main winding, indicated with L1, is supplied directly by the voltage Ea of the network power supply, the other secondary winding L2 is connected to the same power supply but with the interposing condenser C.

In this way, a phase shift of the voltage vector (0 current) is obtained which makes it possible to start the motor 1 generating a rotating magnetic field in the stator magnetic circuit.

It is well-known that two quadrature windings, supplied by sinusoidal currents out-of-phase with each-other by a time equal to 90 degrees, each generate a fixed magnetic field whose sum constitutes a rotating magnetic field. The more the shape of the fixed magnetic field of each winding comes close to a sinusoid in the space, the more the field resulting from their sum will contain only the sinusoidal component in the space, rotating at the synchronous speed. This means that an observer integral with the rotor at the synchronous speed can measure the value of a magnetic field, which results constant in time. With a winding having a high number of coils per phase, out of phase with each other spatially and/or with a different pitch, it is possible to approximate the shape of the fixed magnetic field to a sinusoid in the space and, therefore, to carry out that described above. The motors so produced are called distributed winding motors and can theoretically express a torque constant in time.

However, the motor according to the invention is a concentrated winding motor since each phase is made up of two equal opposing coils and, therefore, it does not produce a magnetic field with a sinusoidal shape in the space but rather a magnetic field with an approximately trapezoidal shape. The magnetic field resulting from the windings of the two phases will contain, besides the sinusoidal component in the space and rotating at the synchronous speed, the so-called harmonic wavelength fields and lower rotating speeds. The latter are responsible for torque oscillations, which in the motor according to the invention, are advantageously utilized to favor start-up. Unlike single phase motors where there is a field counter-rotating at the mains frequency with an amplitude equal to the synchronous field, in the motor according to the invention the counter-rotating field is considerably inferior to the synchronous one and the torque oscillations do not affect the silence.

In order to further optimize the structure of the motor according to the invention and, at the same time, reduce production and assembly costs, a expedient will be described which falls within the scope of the present invention. This expedient can be adopted in order to further improve the starting up phase and the overall performance of the motor, even if it is not strictly necessary to combine it with the features already described above.

As already said, the motor 1 comprises a stator 5, with relative core 24 with lamination pack 16 and stator windings 28.

The stator 5 conventionally comprises a plurality of metal laminations 16 arranged in a pack to form the core 24 and stator windings 28 arranged crossways to form at least four pole pieces.

More in particular, the four pole pieces are made with sheared lamination packs 16, substantially E-shaped. Such laminations 16 are obtained from the same sheet metal to reduce production waste and are overlapped in packs to form portions 26 of the stator group also E-shaped.

Each stator pole piece is obtained from coupling a stator winding 28 to a corresponding portion 26 of the lamination pack.

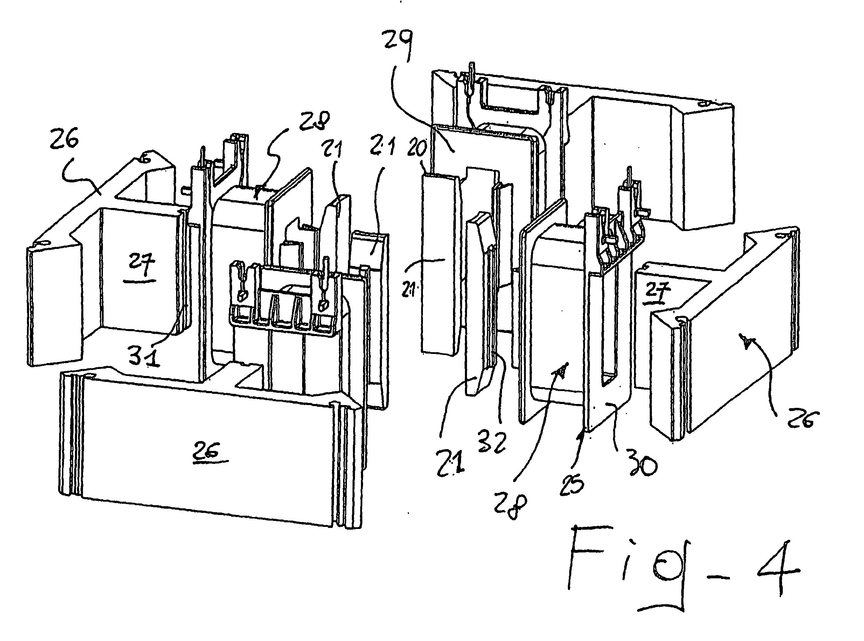

The stator windings 28 are made on coils 25 which are then put on to the central part 27 of the E-shaped lamination pack and the pole pieces so obtained are aligned to form a ring structure shown in figure 4 and normally made to cohere by means of springs which elastically bind the aligned ends of the E-shaped portions 26.

The coils 25 for supporting the stator windings 28 are preferably made in thermoplastic material with a hollow parallelepiped shape with opposing end flanges 29, 30.

Each coil 25 is intended to be put on with limited play and close to the central portion 27 of the E-shaped portion 26 of the lamination pack 16.

Advantageously, the assembly of the core 24 of the stator group is obtained by means of a lamination pack 16 with an axial length shorter than the axial length of the corresponding ends 21 of the pole pieces.

Even more advantageously, the ends 21 of the pole pieces 20 are removable associated to the core 24 with lamination pack 16 or, in any case, are structurally independent from them.

In other words, the ends 21 of the pole pieces are associated to each corresponding internal end of the central portion 27 of the E-shaped portion 26, of the core 24 with lamination pack 16.

This is made possible by the fact that said ends 21 of the pole pieces are made by pressing, starting from microencapsulated magnetic powders and insulated by electrically insulating material. The ends 21 produced in this way will be called hereinafter with the acronym SMC (Soft Magnetic Composite).

In substance, the dimensions of the core 24, where the stator windings 28 are to take place, are disengaged by the dimensions of the pole pieces 20, facing the permanent magnet of the rotor 4.

The above shorter axial length of the lamination pack core 24 is between 25% and 80% and preferably approximately 50% less than the ends of the pole pieces 20.

Surprisingly, this feature of the present invention does not worsen the efficiency of the synchronous motor, but above all it does not worsen performance at breakaway, i.e. at start-up, which is the most critical aspect of this type of motor, as will be described more in detail hereunder.

In substance, from experimental tests carried out by the Applicant, it emerged that, with the same breakaway voltage, start-up times and modes of the motor according to the present invention comply with the specifications of a synchronous motor having a conventionally structured stator, also with considerable cost saving in the stator structure.

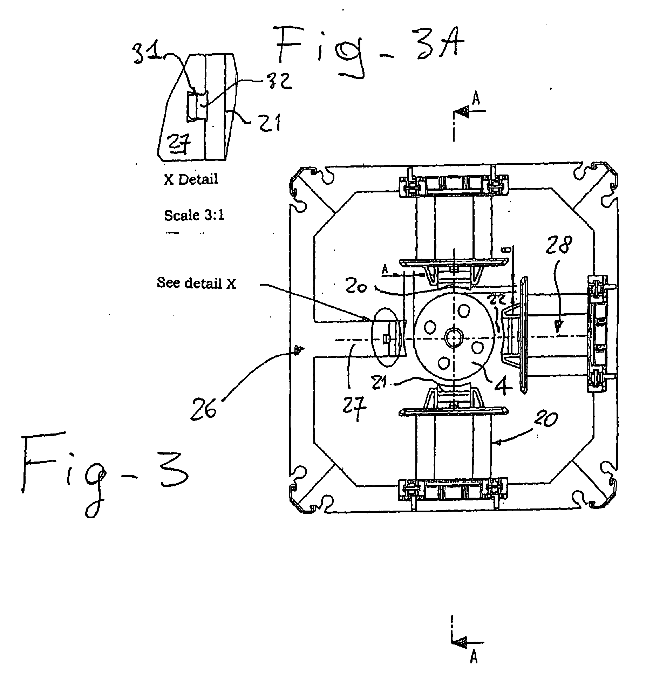

Figures 3 and 3A well illustrate the means of coupling between the ends 21 obtained by pressing of the stator pole pieces and the corresponding internal ends of the central portions 27 of the lamination pack core 24.

Coupling is obtained by a simple mortise and tenon joint 31, 32 made respectively and longitudinally in each end 21 and in each of the matching ends of the portions 27.

Obviously, the coupling means can be of a different form or dual on one or the other of said matching ends.

It should be noted that the synchronous motor 1 of the present invention can be provided with suitable electronic inverter circuits at the start-up phase.

Providing a stator with pairs of pole pieces 20 with smaller dimensions, facilitates start-up of the motor using purely mechanical start-up of the rotor.

An asymmetrical air-gap between at least one pair of opposing stator pole pieces 20 makes it possible to set up a motor with nearly mechanical start-up.

In other words, according to the invention as well illustrated in the embodiment in figure 3, by adopting an expedient with the pair of opposing main pole pieces 20 of the stator distanced from the rotor 4 by an air-gap A greater than the air-gap B which separates the remaining opposing pair of secondary pole pieces, it is possible to obtain a reduction in the breakaway voltage, so making mechanical start-up of the motor advantageous. In this way, the magnetic induction between stator and rotor is sufficiently out-of-balance as to induce virtually mechanical start-up of the rotor.

In an electric motor, a cogging torque is proportional to the opposite of the variation in energy of the magnetic field.

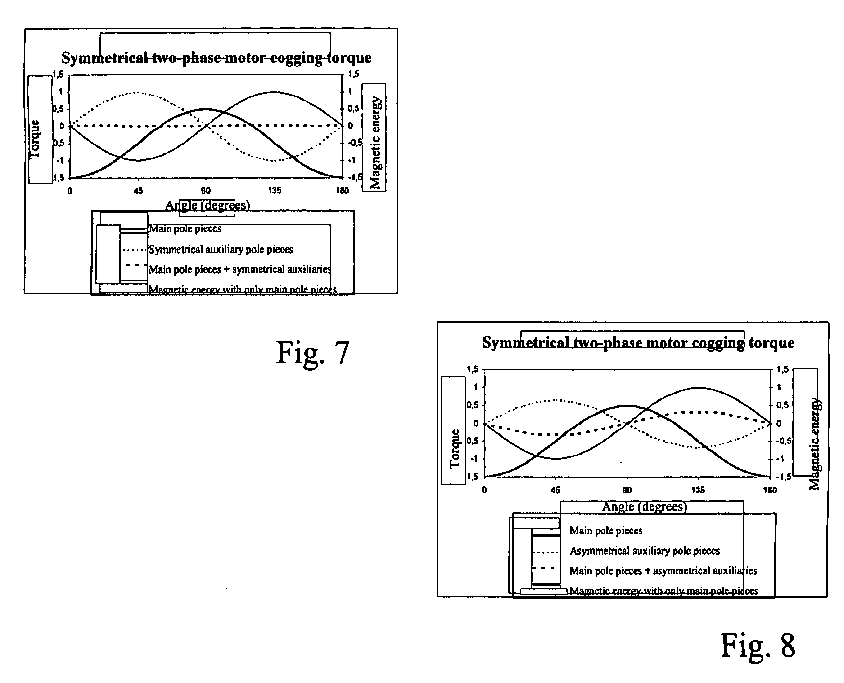

In the case of a rotor with an anisotropic magnet with so-called diametral (parallel) orientation and only one pair of opposing pole pieces, the magnetic energy and the cogging torque follow the trend indicated in the graph in figure 7.

In the case of a symmetrical two-phase motor, the cogging torque contributions of the pair of secondary pole pieces, having the same geometry but mechanically out-of-phase by 90 degrees compared to the pair of main pole pieces, follow a very similar trend but also out-of-phase by 90 degrees. The sum of the torque contributions of all the pole pieces is nullified and, therefore, the magnet does not have a preferred rest position of alignment.

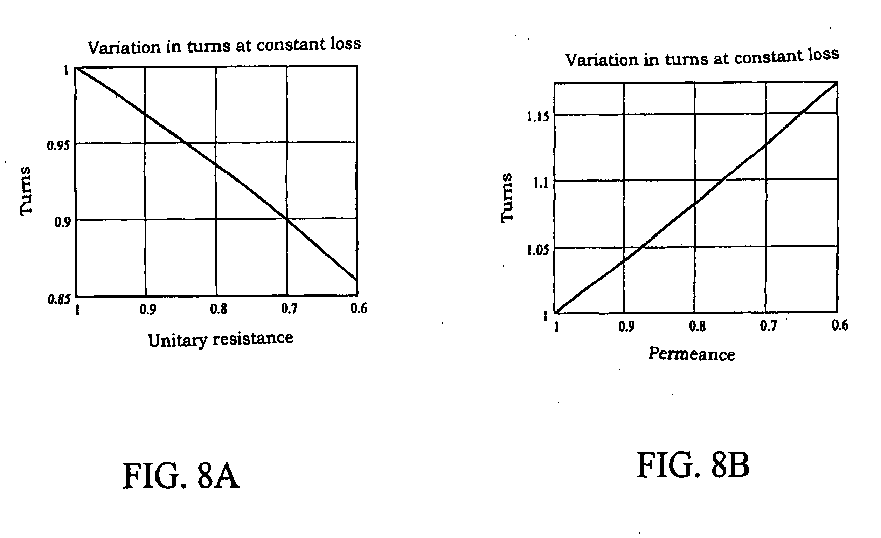

Advantageously, the use of main and secondary asymmetrical pole pieces appears to establish a contribution to the cogging torque of the motor which, as illustrated in figure 8, follows a sinusoidal trend with a zero net value only in alignment situations with the main pole pieces at 0 and 180 degrees and with the secondary pole pieces at 90 and 270 degrees.

Furthermore, it should be noted how the rest position at 90 degrees, unlike those at 0 and 180, is an unstable position for the rotor; in fact, an infinitesimal shifting of the rotor clockwise or anticlockwise gives rise to a torque which tends to increase said shifting taking the rotor to 0 or 180 degrees, positions in which the rotor stops.

In this way, the rotor has a preferred rest position of alignment with the poles facing the pair of main pole pieces.

In other words, pairs of pole pieces, main and secondary, asymmetrical with each other, make it possible to obtain a cogging torque, which is not constantly zero, determining a preferred rest position of alignment. This greatly benefits the motor during start-up and, in particular, considerably reduces the breakaway voltage.

The present invention provides to obtain main pole pieces with dimensions different from the secondary pole pieces, so obtaining asymmetry between these pairs.

Essentially the object of the invention is to reduce the breakaway voltage and to take advantage of the preferred rest position of alignment of the pole pieces by means of their geometrical asymmetry. However, this produces an undesired collateral effect, i.e. possible torque oscillation. This undesired effect can be put right by asymmetrical turns which reduce the torque oscillations introduced by the geometrical asymmetry.

The above-described asymmetry of the pairs of pole pieces has an effect on the respective currents I1 and I2, from the two branches L1 and L2 respectively, which have different amplitudes and are out-of-phase by a time by an angle different from 90 degrees. The inevitable torque nonuniformity, which results, is paid, in reality, through an increase in vibrations, in particular at a frequency of 100 Hz.

The drawback can be reduced by carrying out the winding L2 of the pair of secondary pole pieces with a different number of turns (for example, greater than the number of turns) from the winding L1 of the pair of main pole pieces and with a suitable choice of the capacitance value of the condenser placed in series at L2.

From experimental measurements, it was possible to establish a turn ratio between the pair of main coils and the pair of secondary coils suitable to considerably reduce the vibrations caused by the geometrical asymmetry, without penalizing the start-up voltage.

The residual torque ripple is very modest compared to the savings represented by the total lack of electronic circuitry used during motor start-up.

It should also be noted that a shorter axial length of the lamination pack core 24 results, consequently, a smaller cross section of the coils 25 supporting the windings 28. It ensues that it is possible to increase the number of turns using the same quantity of copper, due to the smaller perimeter of each turn.

Without going into elaborate theoretical concepts, it is worth noting that, with the motor according to the present invention, a greater specific power can be obtained with the same amount of losses. The supply voltage is linked to the breakaway voltage according to a ratio well defined in design specifications and normally greater than 1.1. The voltage applied at the input terminals is generally distributed in a fall $\Delta Vr$ on the resistance of the coil Ra, a fall $\Delta Vd$ on the dispersion inductance Ld, i.e. tied to all the magnetic flux which does not link the rotor 4, and an electromotive force $E_0$ on the induced reaction inductance Li relative to the magnetic flux which links the magnet and produces torque.

Hence the vector relation:

$$Ea = \Delta Vr + \Delta Vd + E_0$$

The maximum number of turns must be suitably low so as to guarantee the breakaway voltage desired. But since the losses depend on the ratio Ea/N, it ensues that the losses and the heating at nominal voltage will be considerably higher than what would be suitably feasible if the supply voltage was not linked to the breakaway voltage and the motor was optimized for maximum electrical efficiency.

It results from the previous relation that the components $\Delta Vr$ and $\Delta Vd$ reduce the voltage effectively available to create torque, both during the start transient phase and in conditions of synchronism. The motor according to the invention has substantially managed to minimize the effect of the voltage drops by reducing the respective parameters Ra and Ld. The result is the possibility to increase the number of turns while keeping constant the breakaway voltage value.

As is known, the current of a synchronous motor with isotope rotor is given by:

$$I = \frac{\sqrt{E_a^2 + E_o^2 - 2 \cdot E_a \cdot E_o \cdot \cos(\delta)}}{Z}$$

$E_0$ is the voltage induced only by the flux of the magnet on the winding of a phase and can be expressed by the product: $E_0 = N \cdot (2\pi \cdot f) \cdot \phi = N \cdot \omega \cdot \phi$, with $\phi$ effective flux induced by the magnet in winding, depending exclusively on the material and the geometry of the motor.

$\delta$ is the so-called "angle of load" obtained from:

$$P_{mecc} = 2 \cdot \left( E_a \cdot \frac{E_o}{Z} \cdot \sin\left( \delta + \text{atan}\left( \frac{R_a}{\omega \cdot L_s} \right) \right) - \frac{E_o^2 \cdot R_a}{z^2} \right)$$

Z is the impedance of the motor $Z^2 = Ra^2 + (2\pi \cdot f \cdot Ls)^2$, with f the supply frequency and Ls the stator synchronous inductance. The latter differs from Ld since it also comprises the reaction inductance Li, due to the part of the stator flux which invests the magnet, producing the driving torque, so that Ls = Ld+Li.

Since the flux linkage $N \cdot \phi$ is proportional to Li, it would be appropriate to be able to maximize such value. However, Li depends on the geometry of the air-gap, in other words on the part of the motor which faces the magnet, which is subjected to constraints different from those of the other parts of the motor, which mainly influence Ld. Therefore, hereinafter we will refer to Ld.

As is known to the skilled in the art, both the resistance Ra and the inductance Li of the winding can be expressed as the product

$$Ra = N^2 \cdot r_{a1}$$

and

$$Ls = N^2 \cdot l_{s1} = N^2 \cdot (l_{d1} + l_{i1})$$

where $r_{a1}$ and $l_{d1}$ would coincide with the resistance Ra and the leakage inductance Ld of the winding if this had only one turn, and will be called "unitary resistance" and "unitary leakage permeance". As far as the resistance is concerned, this is valid for the same length of the average turn and total cross section of the conductor. Given that both parameters depend on $N^2$, this concept extends to the impedance $Z = N^2 \cdot z_1$ ("unitary impedance"). The parameters $r_{a1}$ and $l_{d1}$ and $z_1$ depend exclusively on the constituent material, on the geometry of the motor and on the factor of crowdness of the conducting material. Substituting the expressions of $Z = N^2 \cdot z1$ and $E_0 = N \cdot \omega \cdot \phi$ in the expressions of I and Pmecc, we have:

$$I = \frac{\sqrt{\left(\frac{E_a}{N}\right)^2 + (\omega \cdot \phi)^2 - 2 \cdot \left(\frac{E_a}{N}\right) \cdot \omega \cdot \phi \cdot \cos(\delta)}}{N \cdot z_1}$$

$$P_{mecc} = 2 \cdot \left[\left(\frac{E_a}{N}\right) \cdot \left(\frac{\omega \cdot \phi}{z_1}\right) \cdot \sin\left(\delta + \operatorname{atan}\left(\frac{r_{a1}}{\omega \cdot l_{s1}}\right)\right) - r_{a1} \cdot \left(\frac{\omega \cdot \phi}{z_1}\right)^2\right]$$

and, finally, the Joule effect

$$P_j = 2N^2 \cdot r_{a1} \cdot I^2 = 2 \cdot \frac{r_{a1}}{z_1^2} \cdot \left[\left(\frac{E_a}{N}\right)^2 + (\omega \cdot \phi)^2 - 2 \cdot \left(\frac{E_a}{N}\right) \cdot \omega \cdot \phi \cdot \cos(\delta)\right]$$

More in particular, in a synchronous motor with the same supply frequency, delivered torque and stator and coil geometry, the current and the losses depend on the ratio $E_a/N$ (supply voltage per turn).

The above can be extended by induction to the breakaway voltage, which is exactly proportional to the number of turns, as confirmed also during experiments.

Acting only on the geometry of the motor and the coils, the unitary resistance and the leakage permeance can be reduced, but this also implies an increase in the absorbed current.

As the unitary resistance decreases, so do the losses in the windings. However, it is possible, with the same volume and cost of conducting material, to keep them constant, reducing the number of turns, as can be seen in figure 8A, where 1 corresponds to the unitary resistance and the turns of the traditional motor. As said above, reducing the turns is equivalent to applying a higher voltage, to the benefit of the breakaway voltage.

As the leakage permeance is reduced, the number of turns necessary to maintain the losses constant in the windings must be increased, as can be seen in figure 8B, where 1 corresponds to the synchronous permeance and the turns of a traditional motor.

However, this is not a disadvantage because increasing the turns makes it possible to increase the flux linkage $N \cdot \phi$ between stator windings and magnets, by virtue of the proportionality between $N \cdot \phi$ and $Li = N^2 \cdot l_{i1}$, having presumed constant $l_{i1}$. So, in this case too, the breakaway voltage is reduced.

In the motor according to the invention, the turns are even greater than those indicated in figures 8A and 8B, with the intention of keeping the breakaway voltage constant at the value also established for the traditional motor.

Also due to the ratio $E_a/N$, the resulting greater number of turns on the windings 28 and the simultaneous reduction in cross section, lead to a lower voltage per turn and, therefore, fewer running losses.

The motor according to the invention has the great advantage that it is particularly silent, since it is structured as a two-phase motor with a particularly regular operation.

Such motor also has the great advantage of having exclusively mechanical start-up, obtained with the simple combination of a phase shift in the power supply and kinematic coupling with double coupling between rotor and load.

Moreover, the motor according to the invention has the important advantage of an unusually simple structure at a production cost much lower than that of existing alternative solutions belonging to the prior art.

Another advantage is given by the fact that the dimensions and shape of the stator pole pieces are disengaged by the dimensions of the lamination pack core to which they are associated.

Finally, the limited number of connections should be noted since this makes assembly easier and more reliable and improves overall efficiency.

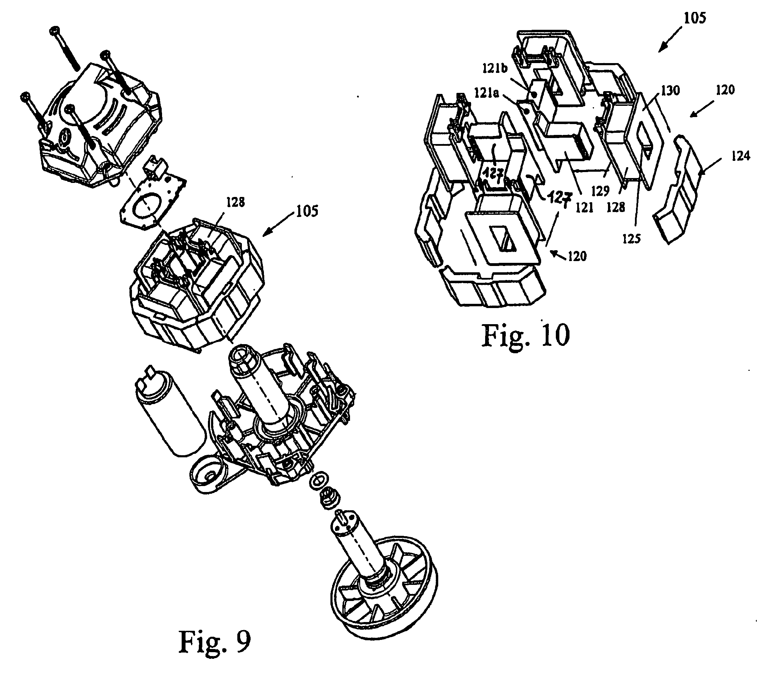

A stator variation, according to the present invention, is schematically illustrated in figures 9 and 10. The stator 105 has four pole pieces 120, each comprising a core 124 and corresponding stator windings 128 conventionally arranged crossways.

The cores 124 are made with sheared laminated lamination overlapping in packs.

The stator windings 128 are made on coils 125 put on a central part 127 of the respective core 124. The so-obtained pole pieces 120 are aligned so as to form a ring-like structure shown in figure 10.

The coils 125 for supporting the stator windings 128 are preferably made in thermoplastic material with a hollow parallelepiped shape with opposing end flanges 129, 130.

Each coil 125 is intended to be put on with limited play and close to the central portion 127 of each lamination pack.

Advantageously, the assembly of the core 124 of the stator group is obtained by means of a lamination pack with an axial length shorter than the axial length of the corresponding ends 121 of the pole pieces 120.

Advantageously, as shown in figure 10, the ends 121 are substantially T-shaped with a head 121a associated to a stem 121b.

The head 121a, facing a central rotor, has an length which is placed substantially axially to the central rotor, while the stem 121b projects radially. In particular, the stems 121b of each end 121 centrally put on, with limited play, on to each respective coil 125 and are associated centrally to the lamination pack core 124, so that they can be removed or, in any case, are structurally independent from them.

This is made possible by the fact that the ends 121 of the pole pieces 120 are made by pressing, starting from microencapsulated magnetic powders and insulated by electrically insulating material.

This embodiment has many advantages; in fact, since the pole pieces are made in separate parts and in particular it allows that the stator can be mounted much more quickly.

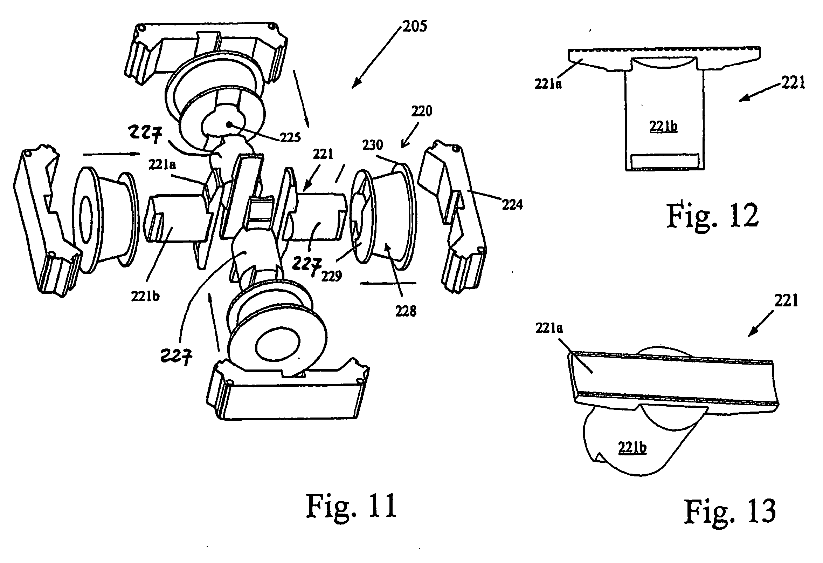

A further variation of the stator is illustrated in figure 13.

In this embodiment, substantially similar to the one illustrated in figure 10, the stator 205 has four pole pieces 220 with stator windings 228 on coils 225 put on a central part 227 of a respective core 224.

Advantageously,the core 224 of the stator group is assembled by means of a lamination pack with an axial length shorter than the axial length of the corresponding ends of the pole pieces 220.

More advantageously, the coils 225, in this embodiment, have the shape of a hollow truncated cone, which widens towards the outside, with opposing end flanges 229, 230.

Each coil 225 is intended to be put on with limited play and close to the central portion 227 of each lamination pack.

Advantageously, the ends 221 are substantially T-shaped with a head 221a connected to a stem 221b, as illustrated in figures 12 and 13.

The head 221a, facing the rotor, has a length which is placed substantially axially to the rotor, while the stem 221b has a substantially radial projection. The stem 221b defines the central part 227 of each lamination pack core 224.

The head 221a has a central groove along its axial length with a substantially "dovetail" or "mortise and tenon" shape.

Advantageously, said ends 121 of the pole pieces and, in particular, the respective stems 121b are associated to the lamination pack core 124 so that they can be removed or, in any case, are structurally independent from them.

This is made possible by the fact that the ends 221 of the pole pieces 220 are made by pressing, starting from microencapsulated magnetic powders and insulated by electrically insulating material.

Advantageously, this embodiment of the stator makes it possible to obtain a uniform and homogeneous magnetic field.

The main advantage of the present invention is the easy mechanical start-up of the motor; in fact, having the rotor in a preferred rest position with the pair of main pole pieces requires lower breakaway voltage during start-up.

A further advantage of the present invention is connected to the simplicity of producing the synchronous electric motor with mechanical start-up obtained by means of an unusual asymmetry of the pairs of pole pieces.

Another considerable advantage is connected to the rapidity with which the pole pieces can be mounted on the two-phase synchronous motor according to the present invention.

A further advantage of the motor according to the present invention is that, thanks to a cogging torque, which is not constantly zero, it is possible to avoid the use of electronic start-up devices.

The last but not least advantage of the motor according to the present invention is its reduced noise during operation.

## Claims

1. Permanent-magnet two-phase synchronous electric motor (1) with mechanical start-up for washing machines and similar, in particular for washing pumps (2), of the type centrally comprising a permanent magnet axial rotor (4) and a stator (5) with a lamination pack core (16) and a pair of main pole pieces (20) with ends (21) and a pair of secondary pole pieces (20) with ends (21), enveloping said rotor (4) and with relative windings (L1, L2), **characterized in that** said pair of main pole pieces is geometrically asymmetrical in respect to said secondary pair of pole pieces, said pair of opposing main pole pieces (20) being distanced from the rotor (4) by means of an air-gap (A) which is greater than the air-gap (B) which separates said pair of secondary pole pieces from the rotor (4).

2. Electric motor (1) according to claim 1, **characterized in that** said pair of main pole pieces has different dimensional characteristics from said secondary pair of pole pieces concerning said asymmetry.

3. Electric motor (1) according to claim 1, **characterized in that** said winding (L1) of said pair of main pole pieces has a different number of turns from said winding (L2) of said pair of secondary pole pieces.

4. Electric motor (1) according to one of the previous claims, **characterized in that** it comprises a coupling between rotor (4) and load by means of at least one motion transmission coupling comprising a driving element and a driven element associated in kinematic series and that the power supply to the windings of one of the pairs of pole pieces (20) is obtained by interposing a condenser (C).

5. Electric motor according to claim 4, **characterized in that** said at least one coupling comprises a first joint formed by one driving element and one driven element and a second joint comprising, in its turn, one driving element and one driven element and where the driven element of the first joint is the driving element of the second joint.

6. Electric motor according to claim 5, **characterized in that** each joint comprises a first driving element eccentric with respect to the axis (x-x) of the rotor and a second driven element, in its turn eccentric with respect to said axis (x-x).

7. Electric motor according to one or more of the previous claims, **characterized in that** said pair of main pole pieces (20) have an axial length of the ends greater than the axial length of the ends of said pair of secondary pole pieces.

8. Electric motor according to one or more of the previous claims, **characterized in that** said ends (21) of said pair of main pole pieces (20) are structurally independent and are removably coupled to the lamination pack core.

9. Electric motor according to one or more of the previous claims, **characterized in that** the ends (21) of said pole pieces (20) of the stator (5) are obtained by pressing of magnetic powders.

10. Electric motor according to claim 9, **characterized in that** said magnetic powders are microencapsulated and insulated by electrically insulating material.

11. Electric motor according to one or more of the previous claims, **characterized in that** the lamination pack core (24) is obtained by annularly linking an E-shaped group of overlapping laminated sheet portions (16) to the central portion (27) of the E extending towards the rotor (4) and that coils (25) supporting the stator windings are put on to said central portions (27) close to the lamination pack (16).

12. Electric motor according to one or more of the previous claims, **characterized in that** the connection between the ends (21) of said pole pieces of the stator (5) and each corresponding portion (27) of the core (24) with lamination pack (16) is obtained by means of a mortise and tenon joint (32).

13. Electric motor according to claim 7, **characterized in that** said shorter axial length is in the range of 25% to 50% compared to the axial length of the corresponding ends of the pole pieces.

14. Electric motor according to claim 7, **characterized in that** said shorter axial length is preferably equal to 50% compared to the axial length of the corresponding ends of the pole pieces.

15. Electric motor according to one or more of the previous claims, **characterized in that** the slenderness ratio, i.e. the axial length of the rotor compared to its diameter, is greater than 2.

**Patentansprüche**

1. Elektrischer zweiphasiger permanentmagnetischer Synchronmotor (1) mit mechanischer Starthilfe, für Waschmaschinen und Ähnliches, insbesondere für eine Waschpumpe (2), von der Bauart zentral umfassend einen axialen Permanentmagnetenrotor (4) und einen Stator (5) mit einem Lamellenpaketkern (16) und ein Paar von Hauptpolstücken (20) mit Enden (21) und einem Paar von Sekundärpolstücken (20) mit Enden (21), die den Rotor (4) umhüllen und mit relativen Windungen (L1, L2), **dadurch gekennzeichnet, dass** das Paar von Hauptpolstücken geometrisch asymmetrisch bezüglich des Paares von Sekundärpolstücken ist, wobei die entgegengesetzten Hauptpolstücke (20) durch Mittel in Form eines Luftspaltes (A) beabstandet vom Rotor (4) gehalten sind, der größer ist als ein Luftspalt (B), der die Sekundärpolstücke vom Rotor (4) trennt.

2. Elektrischer Motor (1) nach Anspruch 1, **dadurch gekennzeichnet, dass** das Paar von Hauptpolstücken unterschiedliche dimensionale Eigenschaften als das sekundäre Paar von Polstücken bezüglich der Asymmetrie hat.

3. Elektrischer Motor (1) nach Anspruch 1, **dadurch gekennzeichnet, dass** die Windungen (L1) des Paares von Hauptpolstücken eine unterschiedliche Anzahl von Umdrehungen als die Windungen (L2) des Paares von Sekundärpolstücken hat.

4. Elektrischer Motor (1) nach einem der vorherigen Ansprüche, **dadurch gekennzeichnet, dass** er eine Kupplung zwischen dem Rotor (4) und einer Last in Form einer Bewegungsübertragungskupplung umfasst, die ein antreibendes Element und ein angetriebenes Element, verknüpft in kinematisch serieller Anordnung, umfasst, und dass die Energieversorgung zu den Windungen von einem der Paare von Polstücken (20) durch Zwischenschaltung eines Kondensator (C) erhalten wird.

5. Elektrischer Motor nach Anspruch 4, **dadurch gekennzeichnet, dass** zumindest eine Kupplung eine erste Verbindung umfasst, die durch ein antreibendes Element und ein angetriebenes Element gebildet ist, und eine zweite Verbindung umfasst, die wiederum durch ein angetriebenes Element und ein angetriebenes Element gebildet ist, wobei das angetriebene Element der ersten Verbindung das antreibende Element der zweiten Verbindung ist.

6. Elektrischer Motor nach Anspruch 5, **dadurch gekennzeichnet, dass** jede Verbindung ein erstes antreibendes Element umfasst, dass exzentrisch bezüglich der Achse (x-x) des Rotors ist, und ein zweites angetriebenes Element umfasst, das wiederum exzentrisch bezüglich der Achse (x-x) ist.

7. Elektrischer Motor nach zumindest einem der vorherigen Ansprüche, **dadurch gekennzeichnet, dass** das Paar von Hauptpolstücken (20) eine axiale Länge der Enden aufweist, die größer ist als eine axiale Länge der Enden der Sekundärpolstücke.

8. Elektrischer Motor nach zumindest einem der vorherigen Ansprüche, **dadurch gekennzeichnet, dass** die Enden (21) der Paare von Hauptpolstücken (20) strukturell unabhängig und lösbar an dem Lamellenpaketkern befestigt sind.

9. Elektrischer Motor (1) nach zumindest einem der vorherigen Ansprüche, **dadurch gekennzeichnet, dass** die Enden (21) der Polstücke (20) des Stators (5) durch Pressen von magnetischem Puder gebildet ist.

10. Elektrischer Motor nach Anspruch 9, **dadurch gekennzeichnet, dass** das magnetische Puder mikro-eingekapselt und isoliert durch elektrisch isolierendes Material ist.

11. Elektrischer Motor nach zumindest einem der vorherigen Ansprüche, **dadurch gekennzeichnet, dass** der Lamellenpaketkern (24) durch ringförmiges Verbinden einer E-förmigen Gruppe von überlappend geschichteten Plattenabschnitten (16) zu einem zentralen Abschnitt (27) des E's, welcher in Richtung des Rotors (4) ragt, gebildet ist, und dass Wicklungen, die die Statorwindungen stützen, auf dem zentralen Abschnitt (27) nahe dem Lamellenpaketkern aufgesetzt sind.

12. Elektrischer Motor nach zumindest einem der vorherigen Ansprüche, **dadurch gekennzeichnet, dass** die Verbindung zwischen den Enden (21) der Polstücke des Stators (5) und jeder der entsprechenden Abschnitte (27) der Kerns (24) mit den Lamellenpaketen (16) durch eine Nut- und Zapfenverbindung (32) erhalten wird.

13. Elektrischer Motor nach Anspruch 7, **dadurch gekennzeichnet, dass** die kürzere axiale Länge im Bereich von 25% bis 50% verglichen zu der axialen Länge der entsprechenden Enden des Polenpaares ist.

14. Elektrischer Motor (1) nach Anspruch 7, **dadurch gekennzeichnet, dass** die kürzere axiale Länge bevorzugt 50% verglichen zur axialen Länge der entsprechenden Enden der Polstücke entspricht.

15. Elektrischer Motor nach zumindest einem der vorherigen Ansprüche, **dadurch gekennzeichnet, dass** das Schlankheitsverhältnis, nämlich die axiale Länge des Rotors verglichen zu seinem Durchmesser, größer als 2 ist.

**Revendications**

1. Moteur électrique synchrone biphasé à aimant permanent (1) à démarrage mécanique pour machines à laver et appareils similaires, en particulier pour les pompes de lavage (2), du type comprenant de manière centrale un rotor axial à aimant permanent (4) et un stator (5) avec un noyau à empilement laminaire (16) et une paire de pièces polaires principales (20) avec des extrémités (21) et une paire de pièces polaires secondaires (20) avec des extrémités (21), enveloppant le dit rotor (4) et avec des bobinages relatifs (L1, L2), **caractérisé en ce que** la dite paire principale de pièces polaires est géométriquement asymétrique par rapport à la dite paire secondaire de pièces polaires, la dite paire principale de pièces polaires opposées (20) étant séparées du rotor (4) par un entrefer (A) qui est plus grand que l'entrefer (B) qui sépare la dite paire secondaire de pièces polaires du rotor (4).

2.  Moteur électrique (1) selon la revendication 1, **caractérisé en ce que** la dite paire principale de pièces polaires a des caractéristiques dimensionnelles différentes de celles de la dite paire secondaire de pièces polaires concernant la dite asymétrie.

3.  Moteur électrique (1) selon la revendication 1, **caractérisé en ce que** le dit bobinage (L1) de la dite paire de pièces polaires principales a un nombre de tours différent de celui du dit bobinage (L2) de la dite paire secondaire de pièces polaires.

4.  Moteur électrique (1) selon l'une quelconque des revendications précédentes, **caractérisé en ce qu'**il comprend un couplage entre le rotor (4) et une charge au moyen d'au moins un couplage de transmission de mouvement comprenant un élément d'entraînement et un élément entraîné associés en série cinématique et **en ce que** l'alimentation électrique aux bobinages d'une des paires de pièces polaires (20) est obtenue en interposant un condensateur (C).

5.  Moteur électrique selon la revendication 4, **caractérisé en ce que** le dit au moins un couplage comprend un premier joint formé par un élément d'entraînement et un élément entraîné et un deuxième joint comprenant, à son tour, un élément d'entraînement et un élément entraîné et où l'élément entraîné du premier joint est l'élément d'entraînement du deuxième joint.

6.  Moteur électrique selon la revendication 5, **caractérisé en ce que** chaque joint comprend un premier élément d'entraînement excentré par rapport à l'axe (x-x) du rotor et un deuxième élément entraîné, à son tour excentré par rapport au dit axe (x-x).

7.  Moteur électrique selon l'une ou plusieurs des revendications précédentes, **caractérisé en ce que** la dite paire principale de pièces polaires (20) a une longueur axiale des extrémités supérieure à la longueur axiale des extrémités de la dite paire secondaire de pièces polaires.

8.  Moteur électrique selon l'une ou plusieurs des revendications précédentes, **caractérisé en ce que** les dites extrémités (21) de la dite paire principale de pièces polaires (20) sont structurellement indépendantes et sont couplées de manière amovible au noyau d'un empilement laminaire.

9.  Moteur électrique selon l'une ou plusieurs des revendications précédentes, **caractérisé en ce que** les extrémités (21) des dites pièces polaires (20) du stator (5) sont obtenues par compression de poudres magnétiques.

10.  Moteur électrique selon la revendication 9, **caractérisé en ce que** les dites poudres magnétiques sont micro-encapsulées et isolées par des matériaux électriquement isolants.

11.  Moteur électrique selon l'une ou plusieurs revendications précédentes, **caractérisé en ce que** le noyau (24) d'empilement laminaire est obtenu en liant de manière annulaire un groupe en forme de E de parties des feuillets laminés superposés (16) à la partie centrale (27) du E s'étendant en direction du rotor (4) et **en ce que** les bobines (25) supportant les bobinages du stator sont placés sur les dites parties centrales (27) à proximité de l'empilement laminaire (16).

12.  Moteur électrique selon l'une ou plusieurs des revendications précédentes, **caractérisé en ce que** la connexion entre les extrémités (21) des dites pièces polaires du stator (5) et chaque partie correspondante (27) du noyau (24) avec l'empilement laminaire (16) est obtenue au moyen d'un joint par tenon et mortaise (32).

13.  Moteur électrique selon la revendication 7, **caractérisé en ce que** la dite longueur axiale plus courte est comprise entre 25% et 50% de la longueur axiale aux extrémités correspondantes des pièces polaires.

14.  Moteur électrique selon la revendication 7, **caractérisé en ce que** la dite longueur axiale plus courte est de préférence égale à 50% de la longueur axiale des extrémités correspondantes des pièces polaires.

15. Moteur électrique selon l'une ou plusieurs des revendications précédentes, **caractérisé en ce que** le rapport de minceur, c'est-à-dire la longueur axiale du rotor comparé à son diamètre, est supérieur à 2.

Fig - 1

Fig. 2

EP 1 760 861 B1

Fig - 3A

Fig - 3

X Detail

Scale 3:1

See detail X

16

Fig - 4

EP 1 760 861 B1

Fig-5

EP 1 760 861 B1

FIG. 6

Fig. 8

Fig. 7

Variation in turns at constant loss

Turns

1.15

1.1

1.05

1

0.6    0.7    0.8    0.9    1

Permeance

FIG. 8B

Variation in turns at constant loss

Turns

1

0.95

0.9

0.85

0.6    0.7    0.8    0.9    1

Unitary resistance

FIG. 8A

Fig. 10

Fig. 9

Fig. 12

Fig. 13

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0983630 B1
- EP 1351375 B1
- US 6452303 B
- GB 621005 A
- EP 0983630 A
- US 2002149282 A
- US 5708406 A